(19) Europäisches Patentamt
European Patent Office
Office européen des brevets

(11) **EP 3 300 293 B1**

(12) **FASCICULE DE BREVET EUROPEEN**

(45) Date de publication et mention
de la délivrance du brevet:
**23.01.2019 Bulletin 2019/04**

(51) Int Cl.:
*H04L 9/00* (2006.01)   *H04L 9/06* (2006.01)
*H04L 9/14* (2006.01)

(21) Numéro de dépôt: **17192810.4**

(22) Date de dépôt: **25.09.2017**

(54) **PROCÉDÉ DE CHIFFREMENT OU DE DÉCHIFFREMENT SYMÉTRIQUE PAR BLOC**

BLOCKWEISES SYMMETRISCHES CHIFFRIER- ODER DECHIFFRIERVERFAHREN

METHOD FOR SYMMETRIC ENCRYPTION OR DECRYPTION BY BLOCKS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.09.2016 FR 1659059**

(43) Date de publication de la demande:
**28.03.2018 Bulletin 2018/13**

(73) Titulaire: **Idemia Identity & Security France
92400 Courbevoie (FR)**

(72) Inventeurs:
• **MAGHREBI, Houssem
92130 Issy Les Moulineaux (FR)**
• **DABOSVILLE, Guillaume
92130 Issy Les Moulineaux (FR)**
• **PROUFF, Emmanuel
92130 Issy Les Moulineaux (FR)**

(74) Mandataire: **Regimbeau
20, rue de Chazelles
75847 Paris Cedex 17 (FR)**

(56) Documents cités:
**EP-A1- 2 180 631       US-A- 5 168 521
US-A1- 2004 165 721   US-B1- 7 471 791**

• **Brecht Wyseur: "WHITE-BOX CRYPTOGRAPHY:
HIDING KEYS IN SOFTWARE", , 15 février 2012
(2012-02-15), XP055080943, Extrait de l'Internet:
URL:http://whiteboxcrypto.com/files/2012_m
isc.pdf [extrait le 2013-09-25]**
• **Christian Rechberger ET AL: "Practical Template
Attacks" In: "Network and Parallel Computing",
1 janvier 2005 (2005-01-01), Springer
International Publishing, Cham 032548,
XP055372585, ISSN: 0302-9743 ISBN:
978-3-642-37634-4 vol. 3325, pages 440-456, DOI:
10.1007/978-3-540-31815-6_35, * le document en
entier ***
• **MOULAY ABDELAZIZ EL AABID ET AL:
"Template Attacks with a Power Model",
INTERNATIONAL ASSOCIATION FOR
CRYPTOLOGIC RESEARCH,, vol.
20071206:142425, 6 décembre 2007 (2007-12-06),
pages 1-15, XP061002514,**

**Description**

**DOMAINE DE L'INVENTION**

La présente invention concerne un procédé de chiffrement/déchiffrement symétrique par blocs.

**ETAT DE LA TECHNIQUE**

Le procédé de chiffrement DES (« Data Encryption Standard ») est un procédé connu de chiffrement symétrique par bloc utilisant une clé secrète. On connaît également le procédé de chiffrement TDES (« triple DES ») comprenant plusieurs chiffrement DES.

Un chiffrement DES est mis en oeuvre en plusieurs tours (ou « rounds » en anglais), chaque tour utilisant une clé de tour.

Les clés de tour sont générées à partir de la clé secrète au cours d'un « cadencement de clés » (« key schedule » en anglais), comprenant conventionnellement les étapes suivantes mises en oeuvre au moyen de deux tables de permutation prédéterminées PC1 et PC2:

- permutation initiale d'au moins une portion de la clé secrète au moyen de la table PC1, de sorte à produire des données initiales,
- mise en oeuvre de plusieurs itérations, une itération comprenant des étapes de :

   ◦ rotation de données dépendant des données initiales, de sorte à produire des données décalées,
   ◦ permutation des données décalées au moyen de la table PC2, de sorte à produire une clé de tour.

Chaque clé de tour générée au cours d'une itération est utilisée au cours d'un tour pour chiffrer des données qui dépendent d'un bloc de données d'entrée. Les tables PC1 et PC2 sont constantes d'un chiffrement DES à l'autre.

Un tel procédé de chiffrement DES est typiquement mis en oeuvre par un dispositif électronique tel qu'une carte à puce.

Or, un tel dispositif peut être sujet à des attaques physiques dites « attaques par canaux cachés » (« Side-Channel Attack » en anglais). Une attaque par canaux cachés consiste à surveiller le comportement physique du dispositif (consommation électrique en courant, rayonnement électromagnétique, etc...) pendant l'exécution d'un algorithme embarqué dans le dispositif. L'information obtenue par une telle surveillance peut être exploitée par la suite pour déterminer des données secrètes utilisées dans des calculs de chiffrement ou de signature.

Par exemple, lorsqu'un tel dispositif met en oeuvre un chiffrement DES, il est alors possible déterminer la clé secrète utilisée au cours de ce chiffrement.

En effet, un cadencement de clés conventionnel n'est pas sécurisé contre des attaques par canaux cachés. Dès lors, pour obtenir les clés de tours et in fine la clé secrète dont elles sont issues, l'attaquant peut n'avoir à exploiter qu'un seul signal généré par le dispositif (par exemple un seul signal de consommation électrique en courant). Ceci est possible en appliquant une attaque par canaux cachés particulière, dite attaque par apprentissage (par exemple « Template attack »). Cette attaque se déroule en deux phases: une phase d'apprentissage durant laquelle l'attaquant détermine des caractéristiques statistiques pour chaque valeur possible de la clé secrète et construit un dictionnaire de clés sur la base de ces caractéristiques, et une phase d'attaque au cours de laquelle l'attaquant observe le signal émis par le dispositif et cherche à retrouver la clé secrète en utilisant le dictionnaire construit durant la phase d'apprentissage.

Les documents suivants mettent en exergue les vulnérabilités des cadencements de clés connus vis-à-vis des attaques par canaux cachés :

- "Template Attacks with a Power Model" par M. Abdelaziz Elaabid, Sylvain Guilley, Philippe Hoogvorst (2007),
- "Practical template attacks" par Chae Hoon Lim et Moti Yung (2004).

Le document EP2351286A1 propose par exemple la méthode suivante pour contrer une attaque par canaux cachés, notamment une attaque par apprentissage : soit A un algorithme de chiffrement, K une clé secrète et M des données d'entrées à chiffrer. Deux bijections sont déterminées : une fonction f (pour transformer la clé secrète) et une fonction g (pour transformer les données d'entrées), les fonctions f et g étant telles que A(f(K), g(M)) est une fonction R de A(K,M), c'est-à-dire que l'on a la relation :

$$A(f(K), g(M)) = R[A(K, M)]$$

Le document EP2351286A1 propose en particulier un mode de réalisation dans lequel A= DES, et f, g, R sont des fonctions de compléments à 1 (notés ~). La relation suivante est alors vérifiée :

$$A(f(K), g(M)) = DES(\sim K, \sim M) = \sim DES(K, M)$$

Le chiffrement des données M comprend le calcul de A(K,M), le calcul de A(f(K), g(M)), et une vérification du respect de la relation qui précède entre les deux résultats calculés. Si la relation n'est bien vérifiée, alors une erreur de chiffrement est détectée.

Toutefois, la solution proposée dans le document EP2351286A1 n'est qu'une protection à l'échelle globale d'un chiffrement de données. Cette solution ne permet donc pas de se protéger contre des attaques par apprentissage scrutant le contenus de buffer tampon, mémorisant des données de calcul intermédiaires calculées au cours d'un cadencement de clés d'un chiffrement DES, parmi lesquelles :

- les données faisant l'objet d'une rotation,
- les clés de tour, résultant d'une permutation mise en oeuvre sur la base de données faisant l'objet d'une rotation. Le document US 7,471,791 divulgue une dérivation de clés cryptographiques en utilisant des tables de permutation et des rotations.

## EXPOSE DE L'INVENTION

Un but de l'invention est de proposer un procédé de chiffrement/déchiffrement symétrique par bloc mieux protégé contre des attaques par canaux cachés, en particulier contre des attaques par apprentissage.

Il est dès lors proposé un procédé de chiffrement ou de déchiffrement symétrique d'un bloc de données à partir d'une clé secrète, le procédé comprenant des étapes de :

- permutation d'au moins une portion de la clé secrète au moyen d'une première table de permutation, de sorte à produire des données initiales,
- mise en oeuvre de plusieurs itérations, une itération comprenant des étapes de :

  o rotation de données dépendant des données initiales, de sorte à produire des données décalées,
  ∘ permutation des données décalées au moyen d'une deuxième table de permutation, de sorte à produire une clé de tour,

- mise en oeuvre d'une pluralité de tours de chiffrement à partir du bloc de données, un tour de chiffrement utilisant une des clés de tour,
- génération d'au moins une des tables de permutation, la génération comprenant

  ∘ la détermination d'au moins une fonction variable d'un chiffrement ou déchiffrement à l'autre,
  ∘ la composition de ladite fonction avec une table de permutation prédéterminée,

- application de l'inverse de ladite fonction à des données dépendant des données produites par l'étape de permutation utilisant la table de permutation générée.

Comme l'une des tables de permutation dépend d'une fonction qui varie d'un (dé)chiffrement à l'autre, les données qui résultent de la permutation mise en oeuvre au moyen de cette table générée varient également d'un (dé)chiffrement à l'autre. Il devient dès lors plus difficile pour un attaquant pratiquant une attaque par canaux cachés de type par apprentissage de deviner la clé secrète ou l'une des clés de tour par scrutation de telles données.

L'application de l'inverse de la fonction mise en oeuvre sur des données qui dépendent des données produites au moyen de la table générée (qui est variable) permettent de générer des données adaptées aux étapes ultérieures du procédé de chiffrement, sans que ces étapes ultérieures n'aient à être modifiées.

Le procédé peut en particulier comprendre des étapes de :

- génération de la table de permutation destinée à être utilisée au cours de la permutation d'au moins une portion de la clé secrète, la génération comprenant

  ∘ la détermination d'une fonction variable d'un (dé)chiffrement à l'autre,

∘ la composition de la fonction avec une table de permutation prédéterminée,

- génération d'au moins une table de permutation destinée à être utilisée au cours de l'étape de permutation d'une itération, la génération comprenant la composition de l'inverse de la fonction avec une table de permutation prédéterminée.

Ici, il est fait en sorte que la table de permutation utilisée pour permuter la portion de la clé secrète soit rendue variable d'une exécution à l'autre du procédé de chiffrement ; sont par conséquent protégées les données initiales, destinées à faire l'objet de rotations.

Le procédé peut comprendre en outre des étapes de :

- génération d'au moins une table de permutation destinée à être utilisée au cours d'une itération, la génération comprenant :

∘ la génération d'une fonction variable d'un (dé)chiffrement à l'autre,
∘ la composition de la fonction avec une table de permutation prédéterminée,

- application de l'inverse de la fonction à des données dépendant de la clé de tour produite au cours de l'itération.

Ici, il est fait en sorte qu'au moins une des tables de permutation (utilisée au cours d'une des itérations) soit rendue variable d'une exécution à l'autre du procédé de (dé)chiffrement ; est par conséquent protégée la clé de tour obtenue au moyen de cette table de permutation à l'issue de l'itération correspondante.

L'application de l'inverse de la deuxième fonction peut être mise en oeuvre à un stade plus ou moins tardif du procédé de chiffrement.

Par exemple, si le procédé de chiffrement comprend un traitement de protection modifiant une clé de tour en une clé de tour modifiée avant son utilisation dans un tour de chiffrement, l'inverse de la deuxième fonction peut alors être appliqué à la clé de tour modifiée.

Alternativement, le procédé peut comprendre la génération d'une table d'expansion, ladite génération comprenant la composition d'une table d'expansion prédéterminée avec la fonction, et dans lequel un tour de chiffrement comprend une étape d'expansion de données dépendant du bloc de données au moyen de la table d'expansion générée, de sorte à produire des données étendues, et une étape de calcul de la disjonction exclusive des données étendues et d'une des clés de tour : l'inverse de la deuxième fonction est appliqué au résultat du calcul de disjonction exclusive calculée. Selon cette alternative, l'application de l'inverse de la deuxième fonction est ici mise en oeuvre au sein même d'un tour de chiffrement.

Le procédé peut être également complété à l'aide d'autres caractéristiques optionnelles listées ci-dessous, prises seules ou en combinaison lorsque cela est techniquement possible.

Le procédé peut comprendre la génération d'au moins une table de substitution, ladite génération comprenant la composition de l'inverse de la fonction avec une table de substitution prédéterminée, et dans lequel un tour de chiffrement comprend en outre une étape de substitution du résultat du calcul de disjonction exclusive au moyen de la table de substitution générée.

Plusieurs tables de permutation peuvent être générées au moyen de fonctions différentes, et être utilisées au cours d'itérations respectives différentes.

La table de permutation générée peut être bijective, et une itération qui suit l'itération utilisant la table de permutation bijective comprendre:

- une permutation inverse de la clé de tour produite au cours de l'itération de référence, de sorte à produire les données dépendant des données initiales auxquelles sont appliquées la rotation, la permutation inverse étant mise en oeuvre au moyen d'une table inverse de la table de permutation générée.
- après l'étape de rotation, mise en oeuvre de l'étape de permutation au moyen de la table de permutation bijective, de sorte à produire une nouvelle clé de tour.

La table de permutation bijective peut être configurée pour permuter une donnée d'entrée en une donnée de sortie par :

- application d'une table de permutation injective à certains bits de la donnée, de sorte à produire une donnée intermédiaire dont le nombre de bits est inférieur au nombre de bits de la donnée d'entrée,
- concaténation de la donnée intermédiaire avec les autres bits de la donnée d'entrée non utilisés par la table de permutation injective, de sorte à produire la donnée de sortie.

Le procédé peut également comprendre la génération d'au moins une valeur de décalage en nombre de bits, la valeur étant variable d'un chiffrement ou déchiffrement à l'autre, au moins une itération comprenant la rotation du résultat de la permutation des données décalées selon la valeur de décalage en bits générée, de sorte à produire la clé de tour.

Plusieurs valeurs de décalage en nombre de bits peuvent être générées, les valeurs étant utilisées au cours d'itérations respectives différentes.

Les valeurs de décalage en nombre de bit peuvent être générées à partir d'un même nombre tiré aléatoirement.

Une table de permutations utilisée au cours d'une étape de permutation peut être sélectionnée parmi plusieurs tables de permutations générées différentes. Cette sélection peut être aléatoire.

Une table de permutation destinée à être utilisée au cours d'une itération peut être sélectionnée en fonction d'une valeur de décalage utilisée au cours de l'étape de rotation de l'itération, la valeur de décalage étant elle-même propre à l'itération.

Une fonction variable peut être constituée d'une pluralité de sous-fonctions composées avec des portions différentes de la table de permutation prédéterminée.

Il est également proposé, selon un deuxième aspect de l'invention, un produit programme d'ordinateur comprenant des instructions de code de programme pour l'exécution des étapes du procédé qui précède, lorsque ce programme est exécuté par au moins un processeur.

Il est également proposé, selon un troisième aspect de l'invention, un dispositif de chiffrement ou de déchiffrement symétrique d'un bloc de données à partir d'une clé secrète, le dispositif comprenant :

- au moins une mémoire pour mémoriser au moins une table de permutation prédéterminée,
- au moins un processeur configuré pour

  ∘ permuter au moins une portion de la clé secrète au moyen d'une table de permutation, de sorte à produire des données initiales,
  ∘ mettre en oeuvre plusieurs itérations, une itération comprenant des étapes de :

    ▪ rotation de données dépendant des données initiales, de sorte à produire des données décalées,
    ▪ permutation des données décalées au moyen d'une table de permutation, de sorte à produire une clé de tour,

- mettre en oeuvre une pluralité de tours de chiffrement à partir du bloc de données, un tour de chiffrement utilisant une des clés de tour,
- générer au moins une des tables de permutation, la génération comprenant

  ∘ la détermination d'au moins une fonction variable d'un chiffrement ou déchiffrement à l'autre, et
  ∘ la composition ladite fonction avec une table de permutation prédéterminée mémorisée, et pour

- appliquer l'inverse de ladite fonction à des données dépendant des données produites par l'étape de permutation utilisant la table de permutation générée.

DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 représente de manière schématique un dispositif de chiffrement ou déchiffrement symétrique par blocs.
- Les figures 2 à 7 représentent certaines étapes de six procédés de chiffrement ou déchiffrement, respectivement selon un premier, deuxième, troisième, quatrième, cinquième et sixième mode de réalisation de l'invention.

Sur l'ensemble des figures, les éléments similaires portent des références identiques.

**DESCRIPTION DETAILLEE DE L'INVENTION**

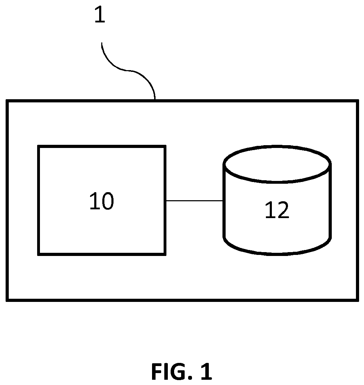

En référence à la **figure 1**, un dispositif de chiffrement/déchiffrement 1 comprend au moins un processeur 10 et au moins une mémoire 12.

Le processeur 10 est configuré pour exécuter un programme de chiffrement/symétrique par blocs, par exemple un chiffrement/déchiffrement DES, TDES ou AES. On prendra dans ce qui suit l'exemple non limitatif d'un chiffrement/déchiffrement DES.

La mémoire 12 est configurée pour mémoriser des données utilisées par ce programme.

En particulier, la mémoire 12 comprend une unité mémoire non volatile qui mémorise les données suivantes :

- au moins deux tables de permutation PC1 et PC2,
- au moins une table d'expansion,
- et au moins une table de substitution, par exemple 8 tables de substitution S1 à S8 (ces tables sont communément appelées « S-Box » dans la littérature).

L'unité mémoire non volatile est de type HDD, SSD, Flash, etc.

La mémoire 12 comprend par ailleurs une unité mémoire volatile (par exemple de type RAM). L'unité mémoire volatile a vocation à mémoriser temporairement des données générées par le processeur 10.

### Premier mode de réalisation

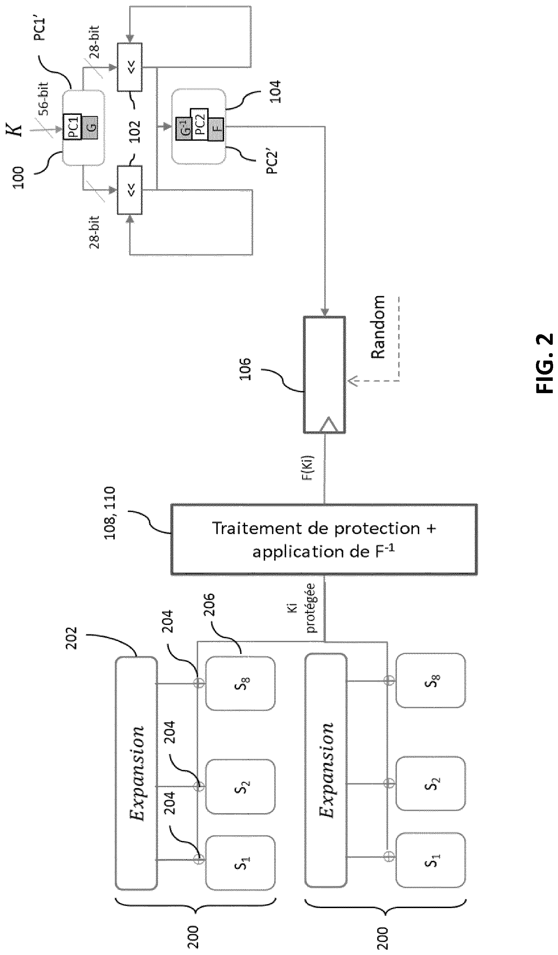

En référence à la **figure 2**, un procédé de chiffrement symétrique par blocs selon un premier mode de réalisation comprend les étapes suivantes.

Le procédé de chiffrement prend en entrée un bloc de données à chiffrer et une clé secrète K.

Le procédé de chiffrement comprend un procédé de « cadencement de clés » (« key schedule ») générant une pluralité de clés de tour à partir de la clé secrète K.

Le procédé de cadencement de clés comprend les étapes suivantes.

Le processeur 10 génère une première table de permutation PC1'. Cette génération comprend la détermination d'une fonction G, qui est variable d'un chiffrement DES à l'autre, et la composition de la fonction G avec la table de permutation PC1 mémorisée dans la mémoire.

La fonction G est par exemple une fonction de permutation déterminée aléatoirement.

Le processeur 10 génère par ailleurs une deuxième table de permutation PC2'. Cette génération comprend : la détermination d'une fonction F, qui est également variable d'un chiffrement DES à l'autre, et la composition de la fonction F avec la table de permutation PC2 mémorisée dans la mémoire. Est également composée avec la table de permutation PC2 l'inverse de la fonction G. On a en définitive :

$$PC1' = G \circ PC1$$

$$PC2' = F \circ PC2 \circ G^{-1}$$

Les fonctions F et G sont de préférence différentes.

Dans une étape 100, le processeur 10 met en oeuvre une permutation sur au moins une portion de la clé secrète K, et ce au moyen de la première table de permutation PC1'.

La clé secrète K a typiquement 64 bits comprenant 56 bits de base apportant de l'entropie à la clé secrète K et 8 bits supplémentaires de redondance n'apportant pas d'entropie à la clé secrète K. La portion de la clé K faisant l'objet de la permutation 100 est formée par les 56 bits de base, et la permutation 100 produit des données initiales ayant une longueur cumulée de 56 bits également.

La fonction G intervenant dans la permutation 100 est par exemple une fonction de permutation déterminée aléatoirement.

La fonction G peut en outre comprendre deux sous-fonctions (G1, G2) chacune opérant sur 28 bits (par exemple, G1 permutera les 28 bits de poids fort et G2 permutera les 28 bits de poids faible). Les sous-fonctions sont par exemple tirées aléatoirement.

Le résultat de la permutation 100 est scindé en deux données initiales : les 28 bits de poids fort de ce résultat et les 28 bits de faible de ce résultat.

Le procédé met ensuite en oeuvre une pluralité d'itérations, chaque itération produisant une clé de tour.

La première itération comprend les étapes suivantes.

Dans une étape 102, le processeur 10 met en oeuvre une rotation de chacune des deux données initiales, de sorte à produire deux données décalées d'un certain nombre de bits (par exemple rotation vers la gauche).

Dans une étape 104, le processeur 10 permute les données décalées au moyen de la table PC2', de sorte à produire une première clé de tour. Plus précisément, la permutation 104 est mise en oeuvre sur la concaténation des deux données décalées.

A cet égard, la fonction F peut opérer sur l'ensemble des bits des données résultant de l'application de la table PC2 (ces données ayant généralement 48 bits).

Alternativement, la fonction F peut comprendre une pluralité de sous-fonctions opérant chacune des portions différentes des données résultant de l'application de la table PC2. Par exemple, la fonction F comprend 8 sous-fonctions opérant chacune sur 6 bits de ces données.

La première clé de tour produite est temporairement mémorisée 106 dans un registre de la mémoire.

Dans une étape 108, le processeur 10 met en oeuvre au moins un traitement de protection modifiant la première clé de tour en une première clé de tour intermédiaire. Le traitement de protection comprend par exemple un masquage et/ou un décalage connus en eux-mêmes.

Une fonction inverse de la deuxième fonction F est appliquée 110 à la première clé de tour intermédiaire, de sorte à obtenir une première clé de tour protégée K1.

Les itérations suivantes comprennent les mêmes étapes 102, 104, 106, 108, 110, de sorte à générer des clés de tour K2, K3, etc.

L'étape de rotation 102 d'une itération donnée est appliquée aux données décalées au cours de l'itération qui précède l'itération donnée.

Dans ce mode de réalisation, une seule est même table PC2' est utilisée au cours de l'étape de permutation 104 de chaque itération. La même fonction F est donc implicitement utilisée au cours de chaque itération, puisque la table PC2' dépendant de cette fonction F.

Le procédé de chiffrement comprend par ailleurs une pluralité de tours de chiffrement 200 du bloc de données d'entrée, chaque tour de chiffrement 200 utilisant l'une des clés de tour générée au cours du cadencement de clés.

Les étapes de chaque tour de chiffrement sont connues en elles-mêmes. On rappelle néanmoins qu'un tour de chiffrement comprend classiquement au moins les sous-étapes suivantes :

- une expansion 202, au moyen d'une table d'expansion mémorisée dans la mémoire 12, de données qui dépendent du bloc de données, de sorte à produire des données étendues,
- le calcul 204 de la disjonction exclusive des données étendues et d'une clé de tour (cette opération étant générale-lement appelée « XOR » dans la littérature, et identifiée à l'aide du signe « $\oplus$ » sur les figures annexées),
- une substitution 206 du résultat du calcul de disjonction exclusive, au moyen d'une table de substitution mémorisée dans la mémoire 12.

De façon non conventionnelle, la clé de tour utilisée au cours du calcul de disjonction exclusive est la première clé de tour protégée K1.

Le nombre de tours de chiffrement et le nombre d'itérations du cadencement de clés sont par exemple au nombre de 16, chaque tour utilisant une clé de tour qui lui est propre.

Dans ce premier mode de réalisation, les étapes d'un tour de chiffrement ne sont pas modifiées par rapport aux procédés de chiffrement DES classiques. Les tables de permutation supplémentaires générées (PC1' et PC2') par rapport aux procédés classiques, modifient seulement la partie cadencement de clés du procédé de chiffrement DES. Ainsi, la protection du cadencement de clés est assurée moyennant une charge de calcul additionnelle et une consommation mémoire additionnelle limitées.

Optionnellement, le registre de la mémoire est mis à jour avec une valeur déterminée aléatoirement entre deux tours successifs de chiffrement. Ceci ce qui permet de faire en sorte que le contenu du registre ne passe pas directement d'une valeur de clé de tour à la valeur de la clé de tour suivante, une telle transition pouvant en effet être exploitée par un attaquant pour deviner les valeurs des clés de tour et en conséquence celle de la clé secrète K.

Le chiffrement DES étant symétrique, un bloc de données est déchiffré au moyen de la même clé secrète K et des mêmes étapes que du procédé de chiffrement DES décrit en relation avec la figure 2.

### Deuxième mode de réalisation

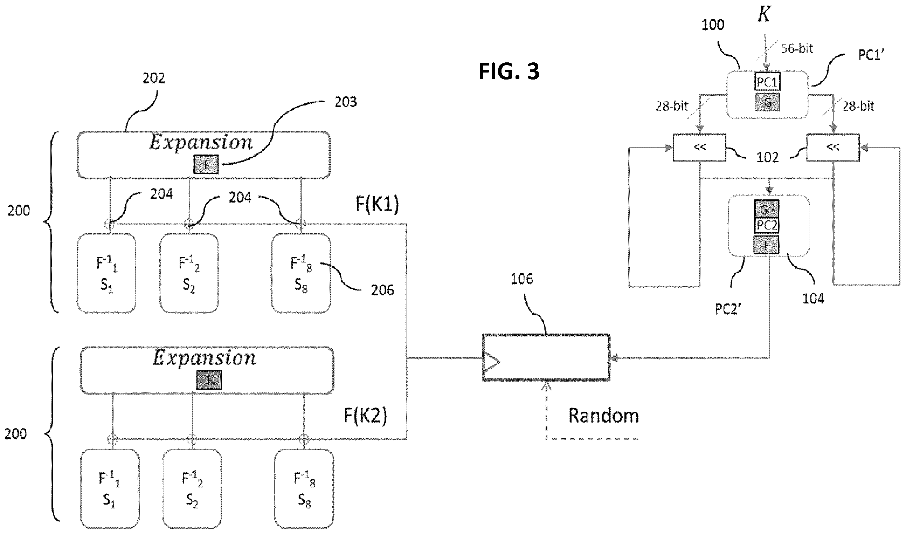

Est illustré en **figure 3** un deuxième mode de réalisation du procédé de chiffrement, différent du premier mode de réalisation par les caractéristiques suivantes.

La table d'expansion mémorisée dans la mémoire n'est pas directement utilisée au cours de l'étape d'expansion 202. Le processeur 10 génère plutôt une deuxième table d'expansion en composant la table d'expansion mémorisée avec la fonction F ; c'est cette deuxième table d'expansion qui est utilisée au cours de l'étape d'expansion 202. Ceci revient en fait à appliquer la fonction F aux données étendues qui résulteraient de l'application de la table d'expansion mémorisée (comme cela est proposé dans le premier mode de réalisation).

Par ailleurs, l'inverse de la fonction F n'est pas appliqué à la première clé de tour ou à une clé de tour intermédiaire résultant d'un traitement de protection de la première clé de tour.

Le calcul 204 de la disjonction exclusive prend en entrée la première clé de tour (résultant du calcul de per-

EP 3 300 293 B1

mutation 104 utilisant la table PC2').

Par ailleurs, l'inverse de la fonction F est, dans ce deuxième mode de réalisation, appliqué au cours de l'étape 206 au résultat de la disjonction exclusive calculée au cours de l'étape 204.

Plus précisément, le processeur 10 génère une deuxième table de substitution en composant la table de substitution mémorisée avec la fonction inverse de la fonction F ; c'est cette deuxième table de substitution qui est utilisée au cours de l'étape de substitution 206.

Les étapes 202, 204, 206 sont répétées pour chaque tour de chiffrement 200.

Ce deuxième mode de réalisation requiert la génération des tables d'expansion et de substitution utilisées au cours des étapes 202 et 206 d'un tour de chiffrement. Cependant, ce deuxième mode de réalisation a pour avantage d'assurer une protection globale des clés de tours (à la fois lors de leur génération par l'algorithme de cadencement et lors de leur manipulation durant l'exécution des tours de chiffrement DES.

### Troisième mode de réalisation

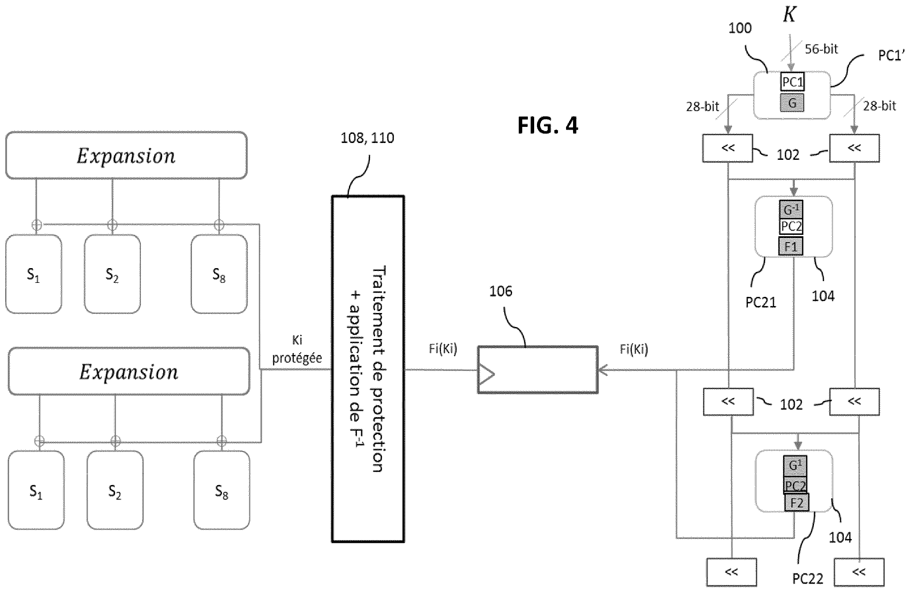

Est illustré en **figure 4** un troisième mode de réalisation du procédé de chiffrement, différent du premier mode de réalisation par les caractéristiques suivantes.

Plusieurs deuxièmes tables de permutation PC21, PC22, ... sont générées au moyen de deuxièmes fonctions F1, F2, ... différentes.

Ces deuxièmes tables sont utilisées au cours d'itérations différentes, plutôt que de générer une seule deuxième table de permutation PC2' réutilisée dans chaque itération du cadencement de clés.

Par exemple, autant de deuxièmes tables de permutations sont générées qu'il y a d'itérations (par exemple 16 tables s'il y a 16 clés de tour à générer).

Comparativement au premier mode de réalisation, ce troisième mode de réalisation requiert la génération de davantage de tables de permutation mais a pour avantage de dé-corréler complètement les clés de tour générées.

### Quatrième mode de réalisation

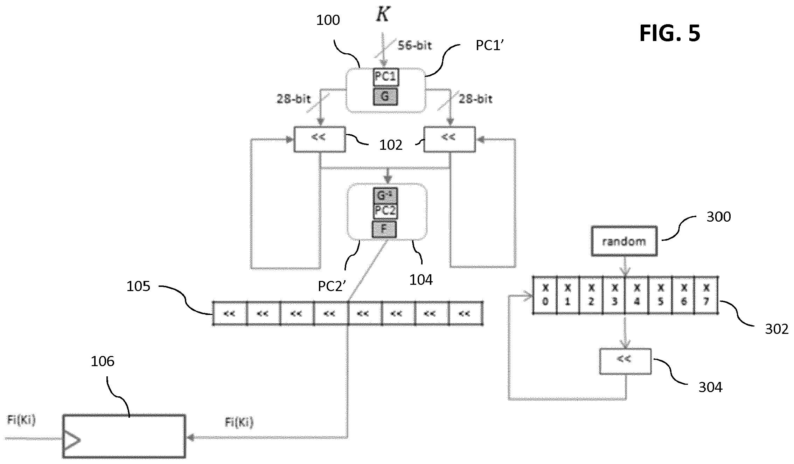

Est illustré en **figure 5** la partie cadencement de clés d'un quatrième mode de réalisation du procédé de chiffrement, différent du premier mode de réalisation par les caractéristiques suivantes.

Le processeur 10 génère au moins une valeur de décalage en nombre de bits, la valeur étant variable d'un chiffrement à l'autre.

Plusieurs valeurs de décalage peuvent être générées à partir d'un même nombre tiré aléatoirement, les valeurs de décalage étant utilisées au cours d'itérations respectives différentes.

Par exemple, le processeur 10 génère autant de valeurs de décalage qu'il y a d'itérations.

Une itération du cadencement de clés comprend outre une étape de rotation 105 du résultat de la permutation 104 des données décalées, sur la valeur de décalage générée. En d'autres termes, cette rotation supplémentaire 105 décale les bits du résultat de l'étape 104 selon le nombre de bits (variable) indiqué par la valeur de décalage. La première clé de tour résulte alors de cette rotation supplémentaire 105.

La génération des valeurs de décalage en bits peut être mise en oeuvre moyennant les étapes suivantes.

Le processeur 10 fait appel 300 à une fonction « random() » retournant un nombre aléatoire ayant plusieurs bits, par exemple 8 bits comme cela est illustré sur la figure 5.

Le processeur 10 mémorise 302 le nombre retourné en guise de décalage en bits pour la première itération.

Le processeur 10 met en oeuvre une rotation 304 du nombre retourné.

Le processeur 10 mémorise 302 le nombre résultant de cette rotation en guise de décalage en bits pour la deuxième itération, et répète les étapes 304 et 302 autant de fois que nécessaire pour générer toutes les valeurs de décalage en nombre de bits.

En définitive, les valeurs de décalages en nombre de bits sont générées à partir d'un seul nombre tiré aléatoirement, ce qui permet de ne faire qu'un seul tirage (en appelant par exemple la fonction « random() »). Un tirage peut être relativement lent d'exécution ; par conséquent, le fait de n'opérer qu'un seul tirage permet de ne pas rallonger de façon significative la durée d'exécution du procédé de chiffrement.

### Cinquième mode de réalisation

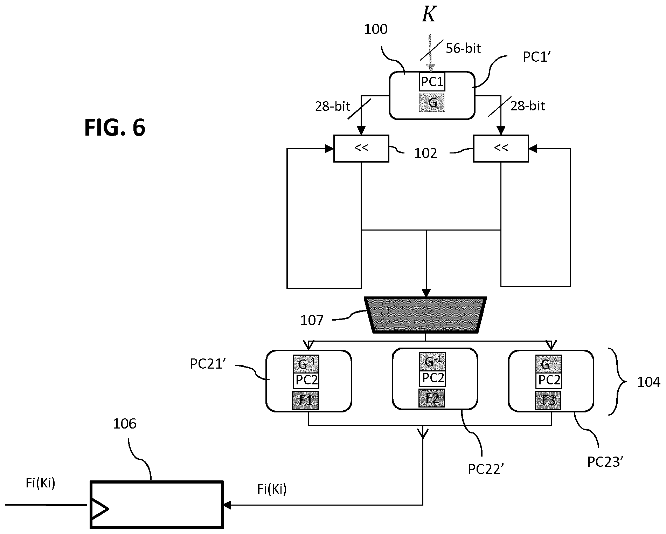

Est illustré en **figure 6** un cinquième mode de réalisation du procédé de chiffrement, différent du premier mode de réalisation par les caractéristiques suivantes.

Le processeur 10 génère non pas une unique deuxième table de permutation PC2', mais plusieurs tables de permutation différentes (donc sur la base de fonctions F différentes). Par exemple, comme cela est illustré sur la figure 6, le processeur 10 génère trois tables de permutation PC12', PC22', PC23', dépendant respectivement des fonctions F1, F2, F3 préalablement déterminées et qui leur sont propres.

La table de permutation utilisée au cours d'une itération donnée est préalablement sélectionnée 107 par le processeur 10 parmi les tables qui ont été générées.

Le processeur 10 sélectionne 107, pour chaque itération, l'une des trois tables générées.

Cette sélection 107 est de préférence aléatoire et/ou mise en oeuvre avant les tours de chiffrement et/ou avant le cadencement de clés.

Ce mode de réalisation présente un niveau de sécurité accru par rapport au premier mode de réalisation.

***Sixième mode de réalisation***

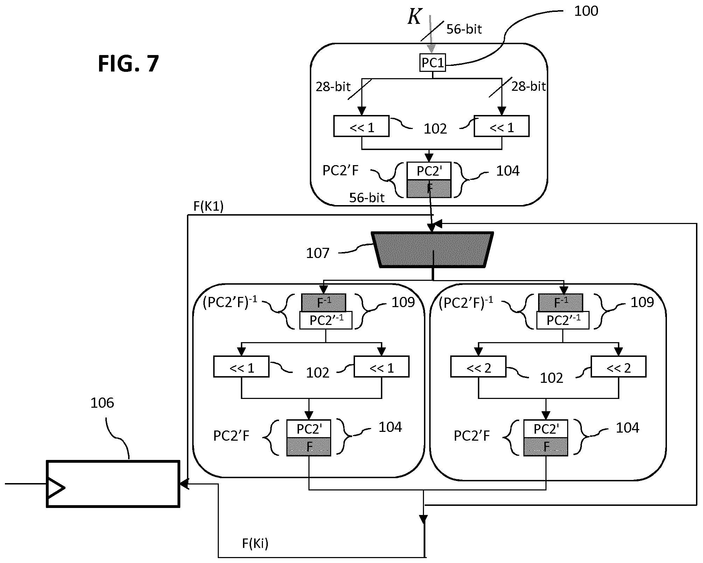

Est illustré en **figure 7** un sixième mode de réalisation du procédé de chiffrement, différent du premier mode de réalisation par les caractéristiques suivantes.

Premièrement, seule une fonction variable d'un chiffrement à l'autre est utilisée (par exemple la fonction F).

La permutation 100 est mise en oeuvre sur la base de la table de permutation prédéterminée PC1, constante d'un (dé)chiffrement à l'autre.

La table PC2' est par ailleurs bijective (c'est-à-dire produit, à partir d'une donnée d'entrée ayant q bits, une donnée de sortie comportant le même nombre de bits q), ce qui est contraire à la pratique usuelle pour implémenter un chiffrement DES.

La table de permutation PC2' est configurée pour permuter une telle donnée d'entrée en une donnée de sortie de la manière suivante:

- appliquer la table de permutation injective PC2 (prédéterminée) à certains bits de la donnée ayant k bits, de sorte à produire une donnée intermédiaire dont le nombre de bits est strictement inférieur à k,
- concaténer la donnée intermédiaire avec les autres bits de la donnée d'entrée, c'est-à-dire les bits non utilisés par la table de permutation injective PC2, de sorte à produire la donnée de sortie.

Par exemple, le résultat de l'application de la table PC2' peut être :

$$PC2(x) \, || \, x[9] \, || \, x[18] \, || \, x[22] \, || \, x[25] \, || \, x[35] \, || \, x[38] \, || \, x[43] \, || \, x[54]$$

où x désigne la donnée d'entrée, codée sur 56 bits, et x[i] désigne le ième bit de la donnée x.

La table de permutation PC2' bijective est composée avec la fonction F en une autre table de permutation, également bijective, notée dans ce qui suit « PC2'F ».

La table PC2'F s'écrit ainsi:

$$PC2'F = F \circ PC2$$

Par ailleurs, une itération n'étant pas la première itération comprend une étape préliminaire supplémentaire de permutation inverse 109.

Avant l'étape de rotation 102, la permutation inverse 109 est appliquée à la clé de tour produite au cours de l'itération précédente, et ce au moyen d'une table inverse de la table PC2'F. La table inverse s'écrit :

$$(PC2'F)^{-1} = (PC2')^{-1} \circ F^{-1}$$

Les données résultant de cette permutation inverse 109 font ensuite l'objet de la rotation 102. Ceci constitue une différence avec les autres modes de réalisation précédemment décrits, dans lesquels les données auxquelles sont appliquées l'étape de rotation 102 d'une itération n'étant pas la première itération sont les données décalées par l'étape de rotation 102 de l'itération précédente. Dans ces autres modes de réalisation, il était par conséquent nécessaire de prévoir trois registres différents : un premier registre pour stocker la clé de tour générée, et deux autres registres pour stocker les données décalées. Dans le sixième mode de réalisation, ces deux autres registres ne sont plus nécessaires, ce qui permet ainsi de réduire la consommation mémoire du procédé.

L'étape de rotation 102 utilise par ailleurs une valeur de décalage en nombre de bits variable, par exemple déterminée dans l'étape 107, comme dans le quatrième mode de réalisation.

L'étape de permutation 104 est ensuite mise en oeuvre sur la base des données décalées produites par l'étape de rotation, et ce au moyen la table PC2'F bijective, de sorte à générer une clé de tour.

La fonction inverse de la deuxième fonction F est appliquée ensuite à des données qui dépendent de la clé de tour (soit après application du traitement de protection 108, comme dans le premier mode de réalisation, soit au sein d'un tour de chiffrement, comme dans le deuxième mode de réalisation).

Dans une implémentation particulière de ce sixième mode de réalisation, il est possible de pré-calculer les trois tables suivantes :

- une première table résultant de la composition, dans cet ordre, de PC1, d'une table représentative d'une rotation sur 1 bit, puis de la table PC2'F : cette table permet de générer la première clé de tour qui sera protégée par la fonction linéaire F générée aléatoirement au début du chiffrement.
- Une deuxième table résultant de la composition, dans cet ordre, de (PC2'F)$^{-1}$, d'une table représentative d'une rotation sur 1 bits, puis de la table PC2'F: cette table permet de générer les clés de tour pour lesquels la valeur de décalage en nombre de bits vaut 1. Ces clés de tour seront protégées par la fonction linéaire F.
- Une troisième table résultant de la composition, dans cet ordre, de (PC2'F)$^{-1}$, d'une table représentative d'une rotation sur 2 bits, puis de la table PC2'F: cette table permet de générer les clés de tour pour lesquels la valeur de décalage en nombre de bits vaut 2. Ces clés de tour seront protégées par la fonction linéaire F.

Sur la figure 7, ces traitements élémentaires mis en oeuvre par les trois tables sont identifiées par trois cadres à coins arrondis.

Lors de l'exécution de l'algorithme de cadencement de clés, la deuxième table ou la troisième table est sélectionnée, selon le numéro du tour.

Des caractéristiques présentes dans le troisième, le quatrième et/ou le cinquième mode de réalisation peuvent être appliquées pour améliorer la robustesse/efficacité du sixième mode de réalisation, par exemple :

- la génération de tables de permutation différentes pour différentes itérations du cadencement de clés ;
- l'adjonction d'une rotation supplémentaire en sortie d'une permutation 104 ;
- la génération de plusieurs tables telles que la deuxième table ou la troisième table et la sélection aléatoirement, d'un tour à un autre, d'une table à exécuter parmi ces tables.

Les différents modes de réalisation décrits ci-dessus sont applicables à d'autres types de chiffrement symétrique par bloc à base d'une clé secrète, par exemple TDES ou AES.

**Revendications**

1. Procédé de chiffrement ou de déchiffrement symétrique d'un bloc de données à partir d'une clé secrète (K), le procédé comprenant des étapes de :

   • permutation (100) d'au moins une portion de la clé secrète (K) au moyen d'une première table de permutation (PC1'), de sorte à produire des données initiales,
   • mise en oeuvre de plusieurs itérations, une itération comprenant des étapes de :

      o rotation (102) de données dépendant des données initiales, de sorte à produire des données décalées,
      o permutation (104) des données décalées au moyen d'une deuxième table de permutation (PC2'), de sorte à produire une clé de tour,

   • mise en oeuvre d'une pluralité de tours de chiffrement (200) à partir du bloc de données, un tour de chiffrement (200) utilisant une des clés de tour,

   le procédé étant **caractérisé en ce qu'**il comprend des étapes de

   • génération d'au moins une des tables de permutation (PC1', PC2'), la génération comprenant

      o la détermination d'au moins une fonction (F, G) variable d'un chiffrement ou déchiffrement à l'autre,
      o la composition de ladite fonction (F, G) avec une table de permutation prédéterminée (PC1, PC2),

   • application de l'inverse de ladite fonction (F, G) à des données dépendant des données produites par l'étape de permutation (100, 104) utilisant la table de permutation générée (PC1', PC2').

**2.** Procédé selon la revendication précédente, comprenant des étapes de

• génération de la table de permutation (PC1') destinée à être utilisée au cours de la permutation d'au moins une portion de la clé secrète (K), la génération comprenant

◦ la détermination d'une fonction (G) variable d'un chiffrement ou déchiffrement à l'autre,
◦ la composition de la fonction (G) avec une table de permutation prédéterminée (PC1),

• génération d'au moins une table de permutation (PC2') destinée à être utilisée au cours de l'étape de permutation d'une itération, la génération comprenant la composition de l'inverse de la fonction (G) avec une table de permutation prédéterminée (PC2).

**3.** Procédé selon l'une des revendications précédentes, comprenant des étapes de

• génération d'au moins une table de permutation (PC2') destinée à être utilisée au cours d'une itération, la génération comprenant :

◦ la génération d'une fonction (F) variable d'un chiffrement ou déchiffrement à l'autre,
◦ la composition de la fonction (F) avec une table de permutation prédéterminée (PC2),

• application (110, 206) de l'inverse de la fonction (F) à des données dépendant de la clé de tour produite au cours de l'itération.

**4.** Procédé selon la revendication 3, comprenant au moins un traitement de protection (108) modifiant une clé de tour en une clé de tour modifiée avant son utilisation dans un tour de chiffrement (200), dans lequel l'inverse de la deuxième fonction est appliqué (110) à la clé de tour modifiée.

**5.** Procédé selon la revendication 3, comprenant la génération d'une table d'expansion, ladite génération comprenant la composition d'une table d'expansion prédéterminée avec la fonction (F), et dans lequel un tour de chiffrement comprend des étapes de :

• expansion (202) de données dépendant du bloc de données au moyen de la table d'expansion générée, de sorte à produire des données étendues,
• calcul (204) de la disjonction exclusive des données étendues et d'une des clés de tour, dans lequel l'inverse de la deuxième fonction est appliqué (206) au résultat du calcul (204) de disjonction exclusive calculée.

**6.** Procédé selon la revendication précédente, comprenant la génération d'au moins une table de substitution, ladite génération comprenant la composition de l'inverse de la fonction (F) avec une table de substitution prédéterminée (S1-S8), et dans lequel un tour de chiffrement (200) comprend en outre une étape de :

• substitution (206) du résultat du calcul (204) de disjonction exclusive au moyen de la table de substitution générée.

**7.** Procédé selon l'une des revendications 3 à 6, dans lequel plusieurs tables de permutation (PC21', PC22', PC23') sont générées au moyen de fonctions différentes, et sont utilisées au cours d'itérations respectives différentes.

**8.** Procédé selon la revendication 3, dans lequel :

• la table de permutation générée est bijective,
• une itération qui suit l'itération utilisant la table de permutation bijective comprend:

◦ une permutation inverse (109) de la clé de tour produite au cours de l'itération de référence, de sorte à produire les données dépendant des données initiales auxquelles sont appliquées la rotation (102), la permutation inverse étant mise en oeuvre au moyen d'une table inverse de la table de permutation générée.
◦ après l'étape de rotation (102), mise en oeuvre de l'étape de permutation (104) au moyen de la table de permutation bijective, de sorte à produire une nouvelle clé de tour.

**9.** Procédé selon la revendication précédente, dans lequel la table de permutation bijective est configurée pour permuter une donnée d'entrée en une donnée de sortie par

- application d'une table de permutation injective à certains bits de la donnée, de sorte à produire une donnée intermédiaire dont le nombre de bits est inférieur au nombre de bits de la donnée d'entrée,
- concaténation de la donnée intermédiaire avec les autres bits de la donnée d'entrée non utilisés par la table de permutation injective, de sorte à produire la donnée de sortie.

10. Procédé selon l'une des revendications précédentes, comprenant en outre :

- la génération d'au moins une valeur de décalage en nombre de bits, la valeur étant variable d'un chiffrement ou déchiffrement à l'autre,

et dans lequel au moins une itération comprend en outre une étape de :

- rotation (105) du résultat de la permutation (104) des données décalées selon la valeur de décalage en bits générée, de sorte à produire la clé de tour.

11. Procédé selon la revendication précédente, dans lequel plusieurs valeurs de décalage en nombre de bits sont générées, les valeurs étant utilisées au cours d'itérations respectives différentes.

12. Procédé selon la revendication précédente, dans lequel les valeurs de décalage en nombre de bit sont générées à partir d'un même nombre tiré aléatoirement (300).

13. Procédé selon l'une des revendications précédentes, dans lequel une table de permutations utilisée au cours d'une étape de permutation (100, 104) est sélectionnée (107) parmi plusieurs tables de permutations générées différentes.

14. Procédé selon la revendication précédente, dans lequel la sélection (107) est aléatoire.

15. Procédé selon la revendication 13, dans lequel une table de permutation (PC21, PC22), destinée à être utilisée au cours d'une itération est sélectionnée (107) en fonction d'une valeur de décalage utilisée au cours de l'étape de rotation de l'itération, la valeur de décalage étant elle-même propre à l'itération.

16. Procédé selon l'une des revendications précédentes, dans lequel une fonction (F, G) variable est constituée d'une pluralité de sous-fonctions composées avec des portions différentes de la table de permutation prédéterminée (PC1, PC2).

17. Produit programme d'ordinateur comprenant des instructions de code de programme pour l'exécution des étapes du procédé selon l'une des revendications précédentes, lorsque ce programme est exécuté par au moins un processeur (10).

18. Dispositif (1) de chiffrement ou de déchiffrement symétrique d'un bloc de données à partir d'une clé secrète (K), le dispositif (1) comprenant :

- au moins une mémoire (12) pour mémoriser au moins une table de permutation prédéterminée,
- au moins un processeur (10) configuré pour

  ∘ permuter au moins une portion de la clé secrète (K) au moyen d'une table de permutation, de sorte à produire des données initiales,
  ∘ mettre en oeuvre plusieurs itérations, une itération comprenant des étapes de :

    ▪ rotation de données dépendant des données initiales, de sorte à produire des données décalées,
    ▪ permutation des données décalées au moyen d'une table de permutation, de sorte à produire une clé de tour,

- mettre en oeuvre une pluralité de tours de chiffrement à partir du bloc de données, un tour de chiffrement utilisant une des clés de tour,

le dispositif (1) étant **caractérisé en ce que** le processeur (10) est par ailleurs configuré pour :

• générer au moins une des tables de permutation, la génération comprenant

○ la détermination d'au moins une fonction variable d'un chiffrement ou déchiffrement à l'autre, et
○ la composition ladite fonction avec la table de permutation prédéterminée mémorisée, et pour

• appliquer l'inverse de ladite fonction à des données dépendant des données produites par l'étape de permutation utilisant la table de permutation générée.

**Patentansprüche**

1. Verfahren zum symmetrischen Verschlüsseln oder Entschlüsseln eines Datenblocks anhand eines geheimen Schlüssels (K), wobei das Verfahren Schritte umfasst des:

   • Permutierens (100) von mindestens einem Teil des geheimen Schlüssels (K) mittels einer ersten Permutationstabelle (PC1'), um Anfangsdaten zu erzeugen,
   • Umsetzens von mehreren Iterationen, wobei eine Iteration Schritte umfasst des:

      ○ Rotierens (102) von Daten abhängig von den Anfangsdaten, um verschobene Daten zu erzeugen,
      ○ Permutierens (104) der verschobenen Daten mittels einer zweiten Permutationstabelle (PC2'), um einen Rundenschlüssel zu erzeugen,

   • Umsetzens einer Vielzahl von Verschlüsselungsrunden (200) anhand des Datenblocks, wobei eine Verschlüsselungsrunde (200) einen der Rundenschlüssel verwendet,

   wobei das Verfahren **dadurch gekennzeichnet ist, dass** es Schritte umfasst des

   • Generierens von mindestens einer der Permutationstabellen (PC1', PC2'), wobei das Generieren umfasst

      ○ Bestimmen von mindestens einer Funktion (F, G), die von einer Verschlüsselung oder Entschlüsselung zur anderen variabel ist,
      ○ Zusammensetzen der Funktion (F, G) mit einer vorbestimmten Permutationstabelle (PC1, PC2),

   • Anwendens der Inversion der Funktion (F, G) auf Daten abhängig von den Daten, die über den Permutationsschritt (100, 104) unter Verwendung der generierten Permutationstabelle (PC1', PC2') erzeugt wurden.

2. Verfahren nach dem vorstehenden Anspruch, das Schritte umfasst des

   • Generierens der Permutationstabelle (PC1'), die dazu vorgesehen ist, im Laufe der Permutation von mindestens einem Teil des geheimen Schlüssels (K) verwendet zu werden, wobei das Generieren umfasst

      ○ Bestimmen einer Funktion (G), die von einer Verschlüsselung oder Entschlüsselung zur anderen variabel ist,
      ○ Zusammensetzen der Funktion (G) mit einer vorbestimmten Permutationstabelle (PC1),

   • Generierens von mindestens einer Permutationstabelle (PC2'), die dazu vorgesehen ist, im Laufe des Permutationsschritts einer Iteration verwendet zu werden, wobei das Generieren das Zusammensetzen der Inversion der Funktion (G) mit einer vorbestimmten Permutationstabelle (PC2) umfasst.

3. Verfahren nach einem der vorstehenden Ansprüche, das Schritte umfasst des

   • Generierens von mindestens einer Permutationstabelle (PC2'), die dazu vorgesehen ist, im Laufe einer Iteration verwendet zu werden, wobei das Generieren umfasst:

      ○ Erzeugen einer Funktion (F), die von einer Verschlüsselung oder Entschlüsselung zur anderen variabel ist,
      ○ Zusammensetzen der Funktion (F) mit einer vorbestimmten Permutationstabelle (PC2),

   • Anwendens (110, 206) der Inversion der Funktion (F) auf Daten abhängig von dem im Laufe der Iteration erzeugten Rundenschlüssel.

4. Verfahren nach Anspruch 3, das mindestens eine Schutzverarbeitung (108) umfasst, welche einen Rundenschlüssel vor dessen Verwendung in einer Verschlüsselungsrunde (200) zu einem modifizierten Rundenschlüssel modifiziert, wobei die Inversion der zweiten Funktion auf den modifizierten Rundenschlüssel angewendet wird (110).

5. Verfahren nach Anspruch 3, das weiter das Generieren einer Erweiterungstabelle umfasst, wobei das Generieren das Zusammensetzen einer vorbestimmten Erweiterungstabelle mit der Funktion (F) umfasst, und wobei eine Verschlüsselungsrunde Schritte umfasst des:

• Erweiterns (202) von Daten abhängig vom Datenblock mittels der generierten Erweiterungstabelle, um erweiterte Daten zu erzeugen,
• Berechnens (204) der ausschließenden Disjunktion der erweiterten Daten und eines der Rundenschlüssel, wobei die Inversion der zweiten Funktion auf das Ergebnis der Berechnung (204) der berechneten ausschließenden Disjunktion angewendet wird (206).

6. Verfahren nach dem vorstehenden Anspruch, das das Generieren von mindestens einer Substitutionstabelle umfasst, wobei das Generieren das Zusammensetzen der Inversion der Funktion (F) mit einer vorbestimmten Substitutionstabelle (S1-S8) umfasst, und wobei eine Verschlüsselungsrunde (200) weiter einen Schritt umfasst des:

• Substituierens (206) des Ergebnisses der Berechnung (204) der ausschließenden Disjunktion mittels der generierten Substitutionstabelle.

7. Verfahren nach einem der Ansprüche 3 bis 6, wobei mehrere Permutationstabellen (PC21', PC22', PC23') mittels verschiedener Funktionen generiert werden und im Laufe von jeweiligen verschiedenen Iterationen verwendet werden.

8. Verfahren nach Anspruch 3, wobei:

• die generierte Permutationstabelle bijektiv ist,
• eine Iteration, die der Iteration unter Verwendung der bijektiven Permutation folgt, umfasst:

◦ eine inverse Permutation (109) des im Laufe der Referenziteration erzeugten Rundenschlüssels, um die Daten abhängig von den Anfangsdaten zu erzeugen, auf welche die Rotation (102) angewendet wird, wobei die inverse Permutation mittels einer inversen Tabelle der generierten Permutationstabelle umgesetzt wird,
◦ nach dem Rotationsschritt (102), Umsetzen des Permutationsschritts (104) mittels der bijektiven Permutationstabelle, um einen neuen Rundenschlüssel zu erzeugen.

9. Verfahren nach dem vorstehenden Anspruch, wobei die bijektive Permutationstabelle dafür konfiguriert ist, eine Eingangsdateneinheit in eine Ausgangsdateneinheit zu permutieren durch

• Anwenden einer injektiven Permutationstabelle auf gewisse Bits der Dateneinheit, um eine Zwischendateneinheit zu erzeugen, deren Bitzahl kleiner ist als die Bitzahl der Eingangsdateneinheit,
• Verketten der Zwischendateneinheit mit den anderen Bits der Eingangsdateneinheit, die von der injektiven Permutationstabelle nicht verwendet wurden, um die Ausgangsdateneinheit zu erzeugen.

10. Verfahren nach einem der vorstehenden Ansprüche, das weiter umfasst:

• Generieren von mindestens einem Verschiebungswert in Bitzahl, wobei der Wert von einer Verschlüsselung oder Entschlüsselung zur anderen variabel ist,

und wobei mindestens eine Iteration weiter einen Schritt umfasst des:

• Rotierens (105) des Ergebnisses der Permutation (104) der verschobenen Daten gemäß dem generierten Verschiebungswert in Bits, um dem Rundenschlüssel zu erzeugen.

11. Verfahren nach dem vorstehenden Anspruch, wobei mehrere Verschiebungswerte in Bitzahl erzeugt werden, wobei die Werte im Laufe von jeweiligen verschiedenen Iterationen verwendet werden.

12. Verfahren nach dem vorstehenden Anspruch, wobei die Verschiebungswerte in Bitzahl anhand ein und derselben zufällig gezogenen Zahl (300) erzeugt werden.

13. Verfahren nach einem der vorstehenden Ansprüche, wobei eine Permutationstabelle, die im Laufe eines Permutationsschritts (100, 104) verwendet wird, aus mehreren verschiedenen generierten Permutationstabellen ausgewählt wird (107).

14. Verfahren nach dem vorstehenden Anspruch, wobei die Auswahl (107) zufällig ist.

15. Verfahren nach Anspruch 13, wobei eine Permutationstabelle (PC21, PC22), die dazu vorgesehen ist, im Laufe einer Iteration verwendet zu werden, in Abhängigkeit von einem Verschiebungswert ausgewählt wird (107), der im Laufe des Rotationsschritts der Iteration verwendet wird, wobei der Verschiebungswert seinerseits der Iteration eigen ist.

16. Verfahren nach einem der vorstehenden Ansprüche, wobei eine variable Funktion (F, G) aus einer Vielzahl von Teilfunktionen besteht, die mit verschiedenen Teilen der vorbestimmten Permutationstabelle (PC1, PC2) zusammengesetzt werden.

17. Computerprogrammprodukt, das Programmcodeanweisungen umfasst zum Ausführen der Schritte des Verfahrens nach einem der vorstehenden Ansprüche, wenn dieses Programm von mindestens einem Prozessor (10) ausgeführt wird.

18. Vorrichtung (1) zum symmetrischen Verschlüsseln oder Entschlüsseln eines Datenblocks anhand eines geheimen Schlüssels (K), wobei die Vorrichtung (1) umfasst:

   • mindestens einen Speicher (12), um mindestens eine vorbestimmte Permutationstabelle zu speichern,
   • mindestens einen Prozessor (10), der dafür konfiguriert ist

   ◦ mindestens einen Teil des geheimen Schlüssels (K) mittels einer Permutationstabelle zu permutieren, um Anfangsdaten zu erzeugen,
   ◦ mehrere Iterationen umzusetzen, wobei eine Iteration Schritte umfasst des:

      ▪ Rotierens von Daten abhängig von den Anfangsdaten, um verschobene Daten zu erzeugen,
      ▪ Permutierens der verschobenen Daten mittels einer Permutationstabelle, um einen Rundenschlüssel zu erzeugen,

   • eine Vielzahl von Verschlüsselungsrunden anhand des Datenblocks umzusetzen, wobei eine Verschlüsselungsrunde einen der Rundenschlüssel verwendet,

wobei die Vorrichtung (1) **dadurch gekennzeichnet ist, dass** der Prozessor (10) darüber hinaus dafür konfiguriert ist:

   • mindestens eine der Permutationstabellen zu generieren, wobei das Generieren umfasst

   ◦ Bestimmen von mindestens einer Funktion, die von einer Verschlüsselung oder Entschlüsselung zur anderen variabel ist, und
   ◦ Zusammensetzen der Funktion mit der gespeicherten vorbestimmten Permutationstabelle, und dafür

   • die Inversion der Funktion auf Daten abhängig von den Daten anzuwenden, die über den Permutationsschritt unter Verwendung der generierten Permutationstabelle erzeugt wurden.

## Claims

1. Method for symmetrical encryption or decryption of a data block from a secret key (K), wherein the method comprises steps of:

   • permuting (100) at least one portion of the secret key (K) by means of a first permutation table (PC1') so as to produce initial data,

• executing a plurality of iterations, wherein an iteration comprises steps of:

◦ rotating (102) data dependent on the initial data so as to produce shifted data,
◦ permuting (104) the shifted data by means of a second permutation table (PC2') so as to produce a round key,

• executing a plurality of encryption rounds (200) from the data block, wherein an encryption round (200) uses one of the round keys,

wherein the method further comprises steps of

• generating at least one of the permutation tables (PC1', PC2'), said generating comprising

◦ determining at least one function (F, G) variable from one encryption or decryption to another,
◦ composing said function (F, G) with a predetermined permutation table (PC1, PC2),

• applying the inverse of said function (F, G) to data dependent on the data produced by the permutation step (100, 104) that uses the generated permutation table (PC1', PC2').

2. Method according to the preceding claim, comprising steps of

• generating the permutation table (PC1') intended to be used during the permutation of at least one portion of the secret key (K), said generation comprising

◦ determining a function (G) variable from one encryption or decryption to another,
◦ composing the function (G) with a predetermined permutation table (PC1),

• generating at least one permutation table (PC2'), intended to be used during the step of permuting of an iteration, said generation comprising composing the inverse of the function (G) with a predetermined permutation table (PC2).

3. Method according to one of the preceding claims, comprising steps of

• generating at least one permutation table (PC2') intended to be used during an iteration, said generation comprising:

◦ generating a function (F) variable from one encryption or decryption to another,
◦ composing the function (F) with a predetermined permutation table (PC2),

• applying (110, 206) the inverse of the function (F) to data dependent on the round key produced during the iteration.

4. Method according to claim 3, comprising at least one protective processing (108) modifying a round key into a modified round key before its use in an encryption round (200), wherein the inverse of the second function is applied (110) to the modified round key.

5. Method according to claim 3, comprising generating an expansion table, said generation comprising composing a predetermined expansion table with the second function (F), and wherein an encryption round comprises steps of:

• expanding (202) data dependent on the data block by means of the generated expansion table so as to produce expanded data,
• calculating (204) an exclusive disjunction of the expanded data and of one of the round keys, wherein the inverse of the second function is applied (206) to the result of said calculation (204) of exclusive disjunction.

6. Method according to the preceding claim, comprising generating at least one substitution table, said generation comprising composing the inverse of the function (F) with a predetermined substitution table (S1-S8), and wherein an encryption round (200) further comprises a step of:

• substituting (206) the result of the calculation (204) of exclusive disjunction by means of the generated substitution table.

**7.** Method according to one of claims 3 to 6, wherein several permutation tables (PC21', PC22', PC23') are generated by means of different functions, and are used during different respective iterations.

**8.** Method according to claim 3, wherein:

• the generated permutation table is bijective,
• an iteration following the iteration using the bijective permutation table comprises:

◦ an inverse permuting (109) of the round key produced during the reference iteration so as to produce the data dependent on the initial data to which the rotation (102) is applied, the inverse permutation being implemented by means of an inverse table of the generated permutation table,
◦ after the rotation step (102), carrying out the permutation step (104) by means of the bijective permutation table so as to produce a new round key.

**9.** Method according to the preceding claim, wherein the bijective permutation table is configured to permute an input datum into an output datum by

• applying an injective permutation table to some bits of the datum so as to produce an intermediate datum whereof the number of bits is less than the number of bits of the input datum,
• concatenating the intermediate datum with the other bits of the input datum not used by the injective permutation table so as to produce the output datum.

**10.** Method according to one of the preceding claims, further comprising:

• generating at least one shift value indicating a number of bits, the value being variable from one encryption or decryption to another,

and wherein at least one iteration further comprises a step of:

• rotating (105) the result of the permutation step (104) of the shifted data according to the shift value indicated by the generated bits, so as to produce the round key.

**11.** Method according to the preceding claim, wherein several shift values indicated in number of bits are generated, the values being used during different respective iterations.

**12.** Method according to the preceding claim, wherein the shift values indicating a number of bits are generated from a same number drawn randomly (300).

**13.** Method according to one of the preceding claims, wherein a permutation table used during a permutation step (100, 104) is selected (107) from several different generated permutation tables.

**14.** Method according to the preceding claim, wherein the selection (107) is random.

**15.** Method according to claim 13, wherein a permutation table (PC21, PC22), intended to be used during an iteration is selected (107) as a function of a shift value used during the rotation step of the iteration, wherein the shift value is itself particular to the iteration.

**16.** Method according to one of the preceding claims, wherein a variable function (F, G) consists of a plurality of sub-functions composed with different portions of the predetermined permutation table (PC1, PC2).

**17.** Computer program product comprising program code instructions for execution of the steps of the method according to one of the preceding claims, when this program is executed by at least one processor (10).

**18.** Device (1) for symmetrical encryption or decryption of a data block from a secret key (K), the device (1) comprising:

• at least one memory (12) for storing at least one predetermined permutation table,
• at least one processor (10) configured for

   ∘ permuting at least one portion of the secret key (K) by means of a permutation table so as to produce initial data,
   ∘ performing several iterations, wherein an iteration comprising steps of:

      ■ rotating data dependent on the initial data so as to produce shifted data,
      ■ permuting the shifted data by means of a permutation table so as to produce a round key,

• performing a plurality of encryption rounds from the data block, wherein an encryption round uses one of the round keys,

the device (1) being **characterized in that** the processor (10) is moreover configured for:

• generating at least one of the permutation tables, the generation comprising

   ∘ determining at least one function variable from one encryption or decryption to another, and
   ∘ composing said function with the stored predetermined permutation table, and for

• applying the inverse of said function to data dependent on the data produced by the permutation step wherein the generated permutation table is used.

1

**FIG. 1**

**FIG. 2**

EP 3 300 293 B1

FIG. 3

**FIG. 4**

FIG. 5

**FIG. 6**

FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2351286 A1
- US 7471791 B

**Littérature non-brevet citée dans la description**

- **M. ABDELAZIZ ELAABID ; SYLVAIN GUILLEY ; PHILIPPE HOOGVORST.** *Template Attacks with a Power Model,* 2007
- **CHAE HOON LIM ; MOTI YUNG.** *Practical template attacks,* 2004